# EUROPÄISCHE PATENTSCHRIFT

(11) **EP 0 978 292 B1**
(45) Veröffentlichungstag und Bekanntmachung des Hinweises auf die Patenterteilung: **29.10.2003**
(21) Anmeldenummer: 98810754.6
(22) Anmeldetag: 06.08.1998
(51) Int. Cl.: A61M 39/00

(54) **Schlauchanschluss für Analysegeräte und medizinische Geräte und Verfahren zur Herstellung eines solchen**
Hose connection for analyzers and medical devices and method of manufacturing the same
Raccord pour tuyaux pour appareils d'analyse et appareils médicaux et procédé pour sa fabrication

(43) Veröffentlichungstag der Anmeldung: 09.02.2000
(73) Patentinhaber: Möller Feinmechanik GmbH & Co. KG, 36043 Fulda (DE)
(72) Erfinder: Herget, Bernhard, 36115 Ehrenberg (DE); Reinhardt, Werner, 36137 Grossenlüder (DE)
(74) Vertreter: Riederer, Conrad A., Dr.

(56) Entgegenhaltungen:
- EP-A- 0 786 324
- WO-A-95/23058
- DE-A- 4 403 630
- SE-B- 463 116
- B. GADDINI, M. MORGANTI: "Turbulence measurements in straight connectors for extracorporeal blood circulation" MED. & BIOL. ENG. & COMPUT., Bd. 18, Nr. 4, Juli 1980, Seiten 452-456, XP002088370 Stevenage

## Beschreibung

### Technisches Gebiet der Erfindung

Die vorliegende Erfindung betrifft einen Schlauchanschluss für Analysegeräte und medizinische Geräte, insbesondere für den Anschluss an Analysenadeln. Die Erfindung betrifft auch ein Verfahren zur Herstellung eines solchen Schlauchanschlusses.

### Stand der Technik

Der gegenwärtige Standart der Schlauchanschlüsse für Analysenadeln besteht in einer Steckverbindung zwischen Schlauch und Nadelende. Dazu ist das hintere Nadelende meist konisch ausgeformt, so dass der Schlauch unter Aufweitung seines Durchmessers auf den Konus geschoben werden kann. Dies hat den gravierenden Nachteil, dass beim Aufschieben des Schlauches gerne etwas vom Schlauchmaterial abgeschabt wird, welches Material danach die Hohlnadel verstopfen kann. Zudem, und dies ist nicht minder gravierend, gibt es im Bereich des Überganges zwischen Nadelende und Schlauch eine sogenannte Totwasserecke. Totwasserecken sind Bereiche in einem Strömungskanal, in welche die Strömung nicht oder nur schlecht zukommt. In diesen Totwasserecken vorliegende Flüssigkeit strömt nicht mit dem Hauptflüssigkeitsstrom im Strömungskanal weiter, sondern bleibt in dieser Ecke hängen und neigt allenfalls dazu, Ablagerungen auszufällen. In Totwasserecken können auch zu anlysierende Bestandteile oder Chemikalien aus einer ersten in eine darauffolgende Analyse verschleppt werden, was zu falschen Ergebnissen führt.

Bei einer Variante dieser Ausführung wird der Schlauch auf einen steilen Konus aufgepresst. Dabei ist die Innenseite der Nadel auch konisch ausgeformt, so dass beim Übergang zwischen Nadel und Schlauch über eine kurze Strecke eine Weitung und anschliessend eine Einengung des Strömungskanals auftritt. Dadurch ist die Totwasserecke zwar verkleinert, jedoch bestehen Haftungsprobleme zwischen Nadel und Schlauch.

Von der Handhabung her sehr wohl vorteilhafte Analysenadeln mit verschraubbaren Fittings lösen das Problem der Totwasserecken bisher auch nicht. Ein Ansatz mit Innengewinde wird in der Regel um die Nadel gespritzt und ein Fitting mit einem entsprechenden Aussengewinde umfasst lose den Schlauch. Damit der Schlauch nicht aus dem Fittingteil gezogen wird und der Strömungskanal zwischen Nadel und Schlauch dicht ist, wird das Schlauchende rechtwinklig aufgeweitet. Eine sogenannte Tulpe am Ende eines Teflonschlauches ist zwar machbar, jedoch weist diese, bei Herstellung mit einer der bis anhin bekannten Techniken, immer einen gerundeten Übergang zwischen Tulpe und Strömungskanal auf. Zwischen dem scharfkantigen Ende der Nadel und dieser Rundung besteht wiederum eine Totwasserecke.

Zudem sind bei verschraubbaren Fittings wegen der Materialungenauigkeiten von Schlauchwandung und schlauchseitigem Fittingteil die Strömungskanäle von Nadel und Schlauch oft nicht exakt axial angeordnet. Dadurch entstehen zusätzliche Totwasserecken und zudem sogar noch eine Querschnittverengung des Strömungskanals beim Übergang von Nadelende zu Schlauchende.

### Aufgabe der Erfindung

Es ist deshalb Aufgabe der Erfindung, einen Anschluss für einen Schlauch zu schaffen, bei welchem praktisch keine Totwasserecken auftreten. Eine solche Verbindung soll zudem bedienerfreundlich sein.

### Beschreibung der Erfindung

Erfindungsgemäss wird dies dadurch erreicht, dass die Strömungskanäle beider Anschlussteile, z.B. Schlauch und Analysenadel, Schlauch und Schlauch oder Schlauch und Anschlussröhrchen an ein Gerät, anschlussseitig mit einer zum Strömungskanal praktisch rechtwinklig und scharfkantig ausgebildeten Anschlussfläche beendet sind, wobei wenigstens der Schlauch dazu mit einer Umspritzung versehen ist. Da die Enden von z.B. nadelseitigem und schlauchseitigem Strömungskanal rechtwinklig oder nahezu rechtwinklig und scharfkantig ausgeformt sind, lassen sich die beiden Strömungskanäle exakt stossen. Durch das stumpfe Stossen der beiden Enden ist die Gefahr des Abschabens von Material gebannt. Bei gleichem Innendurchmesser und exakter Ausrichtung der beiden Strömungskanäle gibt es dank der scharfkantigen Endausbildung praktisch keine Totwasserecken. Die Umspritzung ist zweckmässigerweise aus einem chemisch resistenten Material mit hoher Formstabilität gebildet.

Vorteilhaft sind die anschlussseitigen Enden der Anschlussteile je mit einem masshaltigen Kunststoffabschluss umspritzt, welche Umspritzungen jeweils am Innendurchmesser des Strömungskanals ausgerichtet sind. Durch am Strömungskanal ausgerichtete Umspritzungen oder Kunststoffabschlüsse lässt sich das Problem der Ungenauigkeit der Materialstärken von Nadel- und Schlauchwandungen eliminieren. Der Abschluss weist einen Umriss auf, welcher exakt am Innendurchmesser von Schlauch oder Nadel orientiert ist. Dies wird dadurch gewährleistet, dass ein Kern, welcher Teil der Form für das Abschlussteil ist, in die Öffnung von Schlauch oder Nadel gesteckt wird und das Schlauch- oder Nadelende mit dem auf diese Weise an der Form ausgerichteten Strömungskanal umspritzt wird.

Dank der exakten Übereinstimmung der beiden Umspritzungen zueinander und der Umrisse der Umspritzungen zu den Strömungskanalöffnungen ist die Ausrichtung der beiden Strömungskanäle von Nadel und Schlauch stets axial. Eine Ungenauigkeit z.B. eines Verschraubungsteils wirkt sich nicht aus, weil zwischen dem Verschraubungsteil und der Umspritzung eine Toleranz besteht, damit das Verschraubungsteil verdrehbar ist, und weil die eine Umspritzung bezüglich der anderen direkt an oder in der anderen ausgerichtet wird. Vorteilhaft sind für eine solche Ausrichtung beide Kunststoffabschlüsse mit einander entsprechenden Passformen versehen.

Wenn auch das Ende des Schlauches einen Teil der Anschlussfläche bilden könnte, so übersteht doch vorteilhaft wenigstens eine der Umspritzungen das Ende des anzuschliessenden Teiles, insbesondere des Schlauches, und ist in diesem Überstand eine Verlängerung des Strömungskanals mit praktisch identischem Strömungsquerschnitt ausgebildet. Dadurch ist die Anschlussfläche wenigstens auf der Schlauchseite ganz durch die Umspritzung gebildet. Die Dichtung zwischen den Anschlussteilen geschieht demnach nicht durch das Schlauchmaterial. Die Anschlussfläche ist an einem Teil aus einem elastischen Kunststoff mit einer grösseren Formstabilität als das Schlauchmaterial gebildet und die Kanten in einer Umspritzung sind sehr scharf ausbildbar. Allfällige Unregelmässigkeiten des abgelängten Schlauchendes werden mit Spritzgussmasse ausgeglichen. Insbesondere auf der Schlauchseite ist dieser Überstand von Bedeutung, da damit auch der Nachteil der Tendenz des Teflons, sich zu setzen, überwunden wird.

Da der Schlauch aus Teflon oder ähnlichen Materialien bestehen soll, bildet, sobald auf eine Tulpe am Teflonschlauch verzichtet wird, die Haftung zwischen Schlauch und Umspritzung ein Problem. Damit eine ausreichende Haftung erreicht wird, ist der Schlauch auf seiner Aussenseite vorteilhaft mit der Umspritzung verzahnt. Eine solche Verzahnung kann in die Schlauchaussenseite eingebracht werden, z.B. durch Aufrauhen oder durch Einschneiden eines Gewindes. Bevorzugt wird jedoch, eine Verzahnung dadurch zu erreichen, dass wenigstens ein Ring oder eine Muffe auf den Schlauch aufgepresst wird, und dass dieser Ring oder diese Muffe in die Umspritzung eingegossen wird. Vorteilhaft ist die Muffe aus Metall und weist nach innen gerichtete Rippen auf, welche mit dem Schlauch eine Verzahnung eingehen. Es hat sich gezeigt, dass die Verzahnung der Muffe mit dem Teflonschlauch durch Aufpressen der gerippten Muffe erreicht werden kann und der Ausreisswiderstand für den Schlauch danach ausreicht. Die Pressung des Schlauches mit der Muffe bewirkt eine Verengung des Strömungskanals, welche jedoch innerhalb der Toleranzen liegt.

Vorteilhaft sind zwei Muffen hintereinander am Schlauch angeordnet, so dass ein allfälliger Zug auf den Schlauch von der hinteren Muffe aufgenommen wird und dabei die vordere Muffe belastungsfrei bleibt. Dadurch ist zwischen Umspritzung und Schlauch im Strömungskanal auch dann eine dichte Fuge gewährleistet, wenn am Schlauch gezogen wird.

Vorteilhaft weist die Schlauchumspritzung auf der Austrittseite des Schlauches elastische Fortsätze auf, welche den Schlauch begleitend stützen. Dadurch ist einem Abknicken des Schlauches bei seiner Austrittstelle aus der Umspritzung entgegengewirkt. Vorteilhaft sind diese Fortsätze konisch und am Schlauch anliegend ausgebildet, so dass ein Wärmeschutzschlauch über diese auf die Umspritzung gestossen werden kann und die Fortsätze diesen dabei aufweiten helfen. Vorteilhaft weist die Schlauchumspritzung auf der Austrittseite des Schlauches etwa radial abstehende Noppen auf. Diese erhöhen die Haftung für das Ende eines Wärmeschutzschlauchs aus geschäumtem Kunststoff an der Umspritzung.

Ist der Schlauchanschluss mit einem Gewindeverschluss zum Verbinden der beiden zu verbindenden Teile ausgerüstet, so ist vorteilhaft an einem Gewinde wenigstens eine Verdickung eines Gewindestegs oder eine Verengung eines Gewindegrabens ausgebildet. Diese Verdickung oder Verengung bewirkt einen erhöhten Schraubwiderstand und verhindert dadurch als Ausschraubsicherung das selbsttätige Lösen der Schraubverbindung. Dadurch ist eine dichte und daher auch totwassereckenfreie Verbindung gesichert.

Wenn auch die beiden Umspritzungen direkt miteinander verschraubt werden könnten, so ist vorteilhaft, an einer Umspritzung ein Kragen (45) ausgebildet, so dass mit einem Fittingteil (25) gegen den Kragen (45) drückend die Anschlussflächen (65) der beiden Anschlussteile zusammengepresst werden können. Dadurch ist eine gleichmässige Pressung der Anschlussflächen ermöglicht. Dadurch dass der Druck auf die Umspritzung nahe der Anschlussfläche ausgeübt wird, kann eine unerwünschte Verformung der Kunststoffanschlüsse und des Strömungskanals verhindert werden. Dank einem separaten, gegenüber der Umspritzung verdrehbaren Fittingteil oder Einschraubteil, müssen die Anschlussteile beim Zusammenschrauben nicht gegeneinander verdreht werden.

Bei einem Verfahren zur Herstellung eines Schlauchanschlusses für Analysegeräte und medizinische Geräte, insbesondere für Analysenadeln, wird erfindungsgemäss wenigstens der Schlauch, vorzugsweise auch das mit dem Schlauch zu verbindende Teil, mit einem Kunststoffabschluss umspritzt, und an dieser Umspritzung eine zum Strömungskanal rechtwinklige und scharfkantige Anschlussfläche ausgebildet. Diese Anschlussfläche erlaubt es, die beiden aneinander anzuschliessenden Teile praktisch totwassereckenfrei zu fügen. Vorteilhaft wird die Gussform für die Umspritzung zudem mit einem Kern, welcher exakt in den Strömungskanal des anzuschliessenden Teils passt und in diesen eingeführt wird, gegenüber dem Strömungskanal ausgerichtet. Dadurch ist die Positionierung des Strömungskanals gegenüber der Aussenform der Umspritzung unabhängig von den Unterschieden der Wandungsstärken beim Schlauch oder bei der Nadel immer exakt. Dadurch sind Strömungskanäle bei zusammengefügten Umspritzungsteilen immer axial ausgerichtet.

Zur Erreichung einer genügenden Haftung zwischen Schlauch und Umspritzung wird vorteilhaft am Schlauch wenigstens eine Muffe aufgepresst. Dazu wird ein Kern in den Strömungskanal eingeführt und die Muffe von zwei, oder besser drei, Seiten her zusammengepresst. Dadurch wird der Schlauch sehr gleichmässig gepresst, so dass seine Verformung des Schlauches innerhalb der Toleranzen liegt.

Vorteilhaft wird die Muffe, z.B. aus Aluminium oder Messing, zuerst mit nach innen gerichteten, den Schlauchumfang umlaufenden Rippen, z.B. einem Gewinde, versehen. Durch die Pressung werden diese Rippen mit der Wandung des Schlauches verzahnt. Dies ergibt eine überraschend gute Ausreissfestigkeit, welche insbesondere besser ist, als wenn ein Gewinde in die Schlauchwandung geschnitten und dieses Gewinde in die Umspritzung eingegossen wird.

Damit der Schlauch durch den Spritzdruck nicht verschoben wird, wird er, resp. der Ring oder die Muffe, während der Umspritzung je Stelle, an welcher der Schlauch gehalten wird, durch wenigsten zwei Stössel in der Gussform gehalten. Zweckmässig sind zwei derartige Halterungen des Schlauches. Mit Vorteil werden die Muffen mit entsprechend diesen konkav geformten Stempeln oder Stösseln quer zur Formtrennebene am Ort gehalten.

### Kurzbeschrieb der Figuren

Es zeigt:
- Fig. 1: einen Längsschnitt durch einen Schlauchanschluss gemäss dem Stand der Technik mit zwei verschraubbaren Anschlussteilen und einem Teflonschlauch mit Tulpe,
- Fig. 2: einen vergrösserten Ausschnitt aus Figur 1, wobei bezüglich der Position von Schlauch und Nadel zueinander der schlimmste vorkommende Fall dargestellt ist,
- Fig. 3: einen Längsschnitt durch einen erfindungsgemässen Schlauchanschluss,
- Fig. 4: einen vergrösserten Ausschnitt aus Figur 3,
- Fig. 5: einen der Fig. 4 entsprechenden Ausschnitt, jedoch mit einem Strömungskanalübergang zwischen den beiden Umspritzungen,
- Fig. 6: einen Längsschnitt durch eine Umspritzung eines Teflonschlauches mit zwei Muffen zur Erhöhung des Auszugswiderstandes,
- Fig. 7: einen Querschnitt durch einen Teil einer Vorrichtung zum Aufpressen der Muffe,
- Fig. 8: einen Querschnitt durch eine Gussform mit Haltestösseln.

### Beschrieb der Ausführungsbeispiele

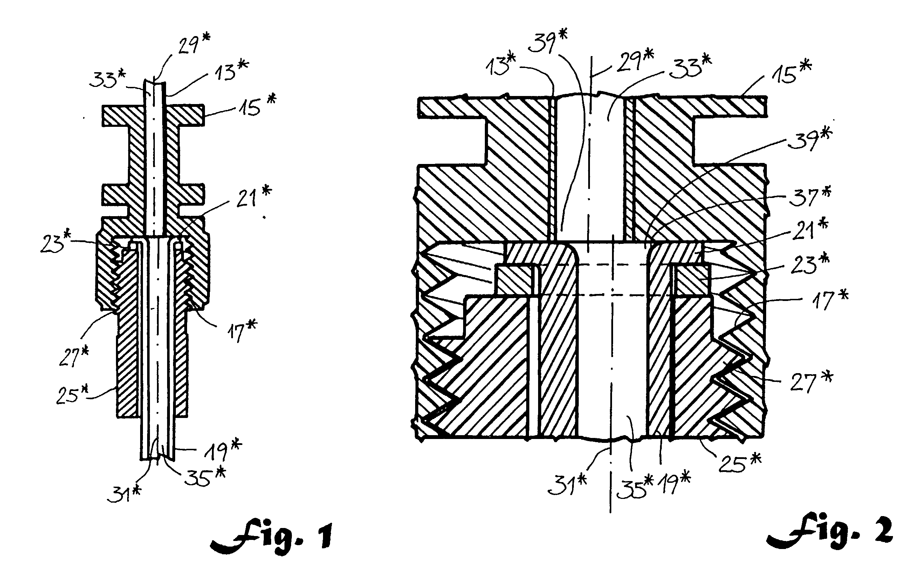

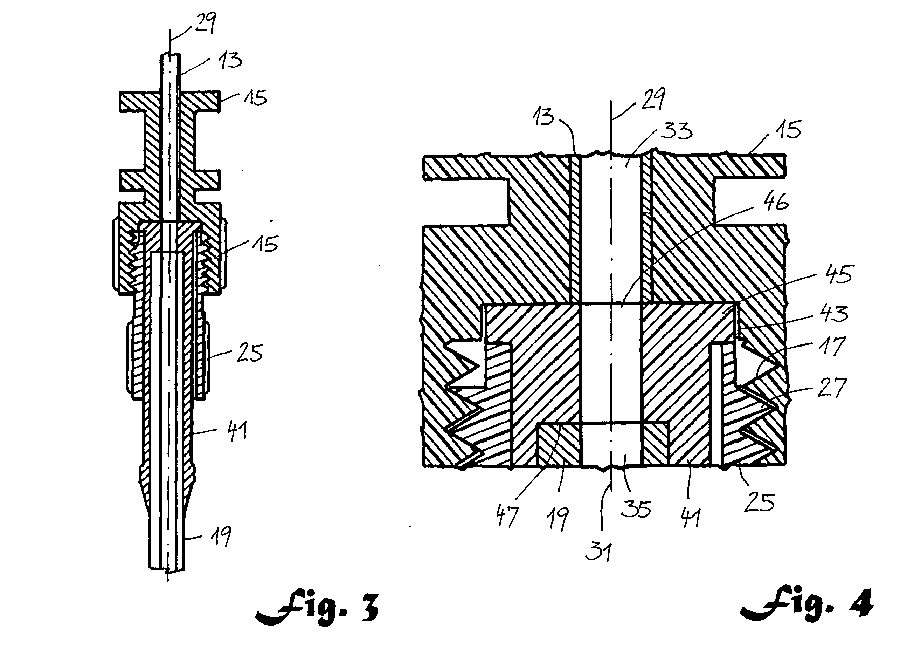

Die Figuren 1 und 2 zeigen anhand des Stands der Technik die Probleme, welche mit der Erfindung gelöst werden. Der in Figur 1 dargestellte Schlauchanschluss an eine Analysenadel 13* weist folgende Teile auf: Die Hohlnadel 13*, um die Hohlnadel 13* eine Umspritzung 15* aus Kunststoff, welche mit einem Innengewinde 17* ausgerüstet ist, dann schlauchseitig den Schlauch 19* aus Teflon mit einer Tulpe 21*, anschliessend an die Tulpe um den Schlauch 19* ein Anpressring 23* aus Metall, und schliesslich das Einschraubteil 25* mit einem Aussengewinde 27*. Jedes dieser Teile weist eine herstellungstechnisch bedingte Ungenauigkeit auf. So weist in der Regel die Wandstärke der Teflonschläuche 19* Schwankungen von bis zu 20% auf. Die Spritzgussteile 15* und 25* weisen ebenfalls Ungenauigkeiten auf, insbesondere auch bei der Übereinstimmung der Gewinde. Diese Ungenauigkeiten bewirken, dass die Achsen der Innenform und der Aussenform bzw. des Ansatzes mit Innengewinde 15* und des Fittingteils 25* nicht übereinstimmen. Zudem besteht ein Spiel zwischen Einschraubteil 25* und Schlauch 19*, damit das Einschraubteil mit der Umspritzung 15* verschraubt werden kann. Im ungünstigsten Fall, welcher in der Regel nicht eintritt, jedoch nicht ausgeschlossen werden kann, sieht die Übereinstimmung der Achsen 29*,31* der beiden verbundenen Strömungskanäle 33*,35* wie in Figur 2 dargestellt aus. Wenn alle Unregelmässigkeiten kumuliert werden, sind die Achsen 29*,31* weit auseinanderliegend und der Durchgang beim Übergang von Nadel 15* zu Schlauch 19* verengt.

Dazu bestehen weitere Probleme: Da Teflon die Neigung hat, sich unter Belastung zu setzen, d.h. der Belastung so auszuweichen, dass der Druck auf das Material nachlässt, bestehen Dichtigkeitsprobleme zwischen der Nadel 13*, bzw. der Nadelumspritzung 15* und der Teflontulpe 21* des Schlauches 19*.

Die Tulpe 21* ist ausserdem nicht kantig ausformbar. An der Kante zwischen Tulpe 21* und innerer Oberfläche des Schlauches 19* entsteht, aufgrund der Materialeigenschaften von Teflon, und durch keine bekannte Methode eliminierbar, eine Ausrundung 37*. Selbst bei übereinstimmenden Achsen 29*,31* entstehen daher Totwasserecken 39* mit den eingangs erwähnten Nachteilen am Übergang zwischen den beiden Strömungskanälen 33*,35*.

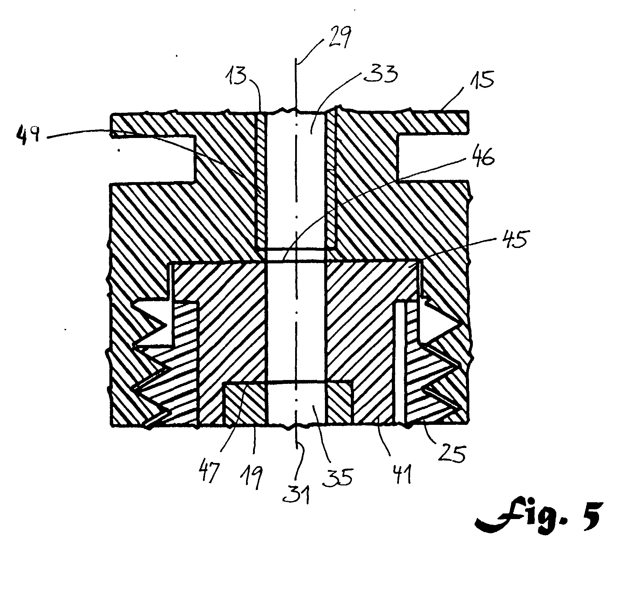

Durch die Ausgestaltung der beiden zu verbindenden Teile mit einem stumpf stossbaren, scharfkantigen und praktisch rechtwinkligen Ende und durch eine exakte Ausrichtung der beiden Achsen 29,31 der Strömungskanäle 33,35 können diese Totwasserecken 39 sehr weitgehend vermieden werden. Ein solcher, erfindungsgemässer Schlauchanschluss mit glattem Übergang der beiden zu verbindenden Strömungskanäle 33,35 und daher praktisch eliminierten Totwasserecken ist in den **Figuren 3 und 4** dargestellt.

Im gezeigten Beispiel sind wiederum die Material- und Herstellungsungenauigkeiten wie in Figur 1 und 2 gezeigt. Jedoch wirken sich diese nicht aus. Die Nadel 13 wie auch der Schlauch 19 sind umspritzt worden und beim Umspritzen ist die Form am Strömungskanal 33,35 ausgerichtet worden. Dadurch gleicht die Kunststoffumspritzung 15,41 die Unregelmässigkeit der Wandung aus. Da beim Umspritzen von Nadel 13 und Schlauch 19 ein Kern in den Strömungskanal 33,35 eingeführt wird und dieser Kern exakt in der Spritzgussform positioniert ist, stimmen die Achsen der inneren und äusseren Formen eines jeden Anschlussteiles 13/15, 19/41 der Genauigkeit der Gussform entsprechend exakt überein.

An der Umspritzung 15 ist eine Passform 43 ausgebildet, in welche der Kragen 45 der Umspritzung 41 exakt hineinpasst. Dadurch ist die Übereinstimmung der beiden Achsen 29,31 sehr exakt und wiederholt herbeiführbar. Eine Ungenauigkeit des Einschraubteiles oder Andrückers 25 fällt nicht mehr ins Gewicht. Der Spielraum zwischen Andrücker und Umspritzung ist zwingend auf der Seite mit der dünneren Wandung des Andrückers 25 grösser, und gleicht die Ungenauigkeit des Andrückers 25 aus.

Der Übergang 46 von einem Strömungskanal zum andern wird zwischen der Nadel 13 und der Umspritzung 41 des Schlauchs 19 hergestellt. Das Schlauchende 47 ist mit Abstand zu diesem Übergang im Innern der Umspritzung 41 angeordnet. Das stumpf abgeschnittene Schlauchende 47 ist durch die Umspritzung dicht umschlossen. Dank dem beim Giessen in den Strömungskanal 35 eingeführten Kern ist der Strömungskanal auch beim Übergang zwischen Schlauchende 47 und Umspritzung 41 ohne jeglichen Absatz in der Wandung.

In **Figur 5** ist eine Variante dazu dargestellt, bei der auch das Nadelende 49 mit Abstand zum Übergang 46 angeordnet ist und der Übergang der Strömungskanäle 33,35 zwischen Umspritzung 15 der Nadel 13 und Umspritzung 41 des Schlauches 19 hergestellt ist.

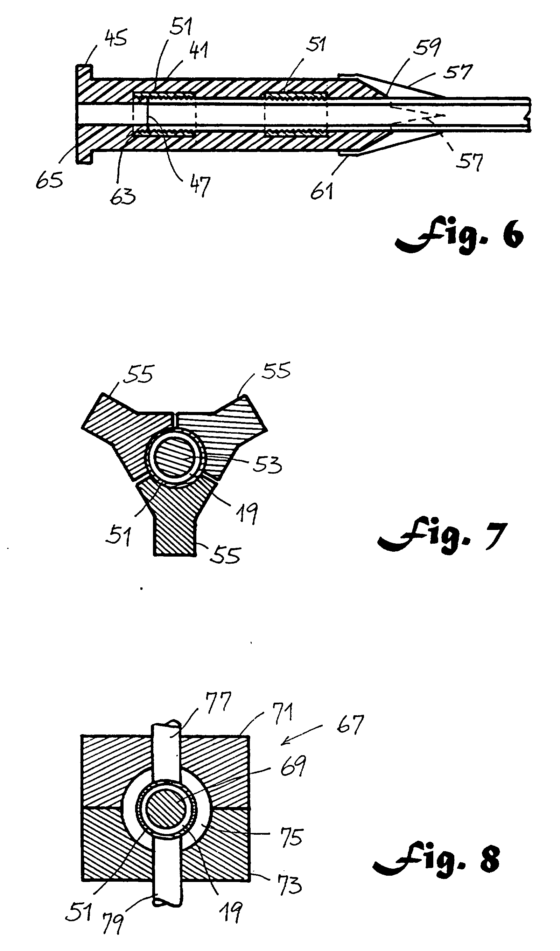

**Figur 6** zeigt einen Querschnitt durch die Umspritzung 41 des Schlauchendes 47 mit der Verankerung des Teflonschlauches 19 in der Umspritzung 41. Damit der Auszugswiderstand des Teflonschlauches 19 genügend gross ist, ist er mit zwei Muffen 51 oder Manschetten versehen. Die Muffen 51 sind auf der Innenseite mit einem Gewinde versehen und auf den Teflonschlauch 19 aufgepresst, so dass das Gewinde in das Material der Wandung des Schlauches 19 eingepresst wird. Dazu wird, wie in **Fig. 7** dargestellt, ein Kern 53 in den Schlauch 19 eingeführt und mit drei Stempeln 55 die Metallmuffe 51 symmetrisch gegen den Schlauch 19 gepresst.

Aus **Fig. 6** ist deutlich, dass zwei Muffen 51 in einem Abstand zueinander angeordnet sind. Die Muffe 51 auf der Schlauchseite (rechts) nimmt den Zug vom Schlauch 19 auf und gibt ihn an die Umspritzung 41 ab. Die Muffe 51 auf der Anschlussseite (links) hält das Ende 47 des Schlauches 19 in stetem Kontakt mit der Fortsetzung durch die Umspritzung 41. Der Übergang zwischen Schlauch und Umspritzung wird dadurch vor einem Auseinanderziehen gesichert. Dabei kann das Schlauchende 47 wie dargestellt weniger weit, jedoch aber auch gleich weit oder weiter entfernt von der Anschlussfläche 65 der Umspritzung 41 sein als das anschlussseitige Ende 63 der anschlussseitigen Muffe 51. Die letzteren zwei Möglichkeiten sind nicht dargestellt.

Schlauchseitig weist die Umspritzung 41 vier konische Fortsätze, Dornen oder Zacken 57 auf, von denen zwei sichtbar sind, ein dritter ist gestrichelt dargestellt. Durch die auslaufende Form der Fortsätze 57 ist der Schlauch 19 mit zunehmendem Abstand von der Austrittkante 59 weniger stark geführt, so dass der Schlauch gegenüber einem Umknicken an der Kante 59 gesichert wird. Zudem lässt sich, da die Fortsätze am Schlauch 19 anliegen, ein Wärme- und/oder Lichtschutzschlauch leichter vom Schlauch 19 her auf die Umspritzung 41 aufschieben. Damit der Wärme- oder Lichtschutzschlauch nicht von der Umspritzung wegrutscht, sind an der Umspritzung 41 nach aussen vorstehende Noppen 61 vorgesehen. Diese Noppen 61 sind mit zwei gegenüberliegenden Fortsätzen 57 zusammengefasst.

**Figur 8** zeigt einen Querschnitt durch die Spritzgussform 67 mit darin festgehaltenem Schlauch 19. Im Strömungskanal des Schlauches 19 ist ein Kern 69 eingeführt. Dieser Kern 69 ist ein Teil der Gussform 67 und ist exakt im Zentrum des durch die beiden Gussformen 71,73 gebildeten Hohlraums 75 angeordnet. Um den über den Kern 69 gestülpten Schlauch 19 ist eine Muffe 51 angeordnet. Diese Metallmuffe 51 wird durch zwei Haltestössel 77,79 gehalten. Diese Stössel 77,79 werden beispielsweise mit Federmitteln gegen die Muffe 51 gedrückt, so dass der Schlauch 19 beim Einspritzen des flüssigen Kunststoffes nicht auf dem Kern 69 verrutscht. Die Stössel sind der Rundung der Muffe 51 entsprechend konkav geformt. Zweckmässigerweise werden beide Muffen 51 derart gehalten.

Zur Vermeidung von Totwasserecken beim Übergang 46 zwischen einer Analysenadel 13 und einem Schlauch 19 oder zwischen zwei Schläuchen 19, so könnte zusammenfassend gesagt werden, werden beide Anschlussenden mit einem Kunststoff umspritzt. Diese Umspritzungen 15,41 weisen je eine praktisch rechtwinklig zu den Strömungskanälen 33,35 verlaufende Anschlussfläche auf, welche Anschlussflächen dicht gegeneinander gepresst werden. Der Schlauch 19 und allenfalls auch die Nadel 13 enden vor dieser Anschlussfläche 65 (Fig. 6), so dass der Übergang 46 von einem zum anderen Strömungskanal 33,35 zwischen Materialien hergestellt ist, welche eine wesentlich höhere Formstabilität als das Teflon des Schlauches 19 aufweisen. Damit die zusammengefügten Strömungskanäle 33,35 stets axial ausgerichtet sind, werden die Umspritzungen 15,41 mittels eines in den Strömungskanal 33,35 eingeführten Kerns (69, Fig. 8) beim Spritzen am Innendurchmesser von Nadel 13 resp. Schlauch 19 ausgerichtet und mit einer exakten Passform 43,45 versehen, welche eine exakte Übereinstimmung der Strömungskanäle 33,35 garantiert.

## Patentansprüche

1. Schlauchanschluss für Analysegeräte und medizinische Geräte, insbesondere für den Anschluss an Analysenadeln, **dadurch gekennzeichnet, dass** die Strömungskanäle (33,35) beider Anschlussteile (19, 13) anschlussseitig mit einer zum Strömungskanal praktisch rechtwinklig und scharfkantig ausgebildeten Anschlussfläche (65) beendet sind, wobei wenigstens der Schlauch dazu mit einer Umspritzung (41) versehen ist.

2. Schlauchanschluss nach Anspruch 1, **dadurch gekennzeichnet, dass** die anschlussseitigen Enden der Anschlussteile (13,19) je mit einem masshaltigen Kunststoffabschluss (15,41) umspritzt sind, welche Umspritzungen jeweils am Innendurchmesser des Strömungskanals (33,35) ausgerichtet sind.

3. Schlauchanschluss nach Anspruch 2, **dadurch gekennzeichnet, dass** beide Umspritzungen (15,41) mit einander entsprechenden Passformen (43,45) versehen sind.

4. Schlauchanschluss nach einem der Ansprüche 1 bis 3, **dadurch gekennzeichnet, dass** wenigstens eine der Umspritzungen (15,41) das Ende des anzuschliessenden Teiles, insbesondere des Schlauches (19), übersteht und in diesem Überstand eine Verlängerung des Strömungskanals (33,35) mit praktisch identischem Strömungsquerschnitt ausgebildet ist.

5. Schlauchanschluss nach einem der Ansprüche 1 bis 4, **dadurch gekennzeichnet, dass** der Schlauch (19) auf seiner Aussenseite mit der Umspritzung (41) verzahnt ist.

6. Schlauchanschluss nach einem der Ansprüche 1 bis 5, **dadurch gekennzeichnet, dass** wenigstens ein Ring oder eine Muffe (51) auf dem Schlauch (19) aufgepresst ist, und dass diese Muffe (19) in die Umspritzung (41) eingegossen ist.

7. Schlauchanschluss nach Anspruch 6, **dadurch gekennzeichnet, dass** die Muffe (51) aus Metall ist und nach innen gerichtete Rippen aufweist, welche mit dem Schlauch (19) verzahnt sind.

8. Schlauchanschluss nach Anspruch 6 oder 7, **dadurch gekennzeichnet, dass** zwei Muffen (51) hintereinander am Schlauch (19) angeordnet sind.

9. Schlauchanschluss nach einem der Ansprüche 1 bis 8, **dadurch gekennzeichnet, dass** die Schlauchumspritzung (41) auf der Austrittseite des Schlauches (19) mehrere Fortsätze (57) aufweist, welche den Schlauch (19) elastisch begleitend stützen.

10. Schlauchanschluss nach einem der Ansprüche 1 bis 9, **dadurch gekennzeichnet, dass** die Schlauchumspritzung (41) auf der Austrittseite des Schlauches (19) etwa radial abstehende Noppen (61) aufweist.

11. Schlauchanschluss nach einem der Ansprüche 1 bis 10, mit einem Gewindeverschluss (17,27) zum Verbinden der beiden aneinander anzuschliessenden Teile, **dadurch gekennzeichnet, dass** an wenigstens einem Gewinde wenigstens eine Verdickung eines Gewindestegs oder eine Verengung eines Gewindegrabens ausgebildet ist.

12. Schlauchanschluss nach einem der Ansprüche 1 bis 11, **dadurch gekennzeichnet, dass** an einer Umspritzung ein Kragen (45) ausgebildet ist, so dass mit einem Fittingteil (25) gegen den Kragen (45) drückend die Anschlussflächen (65) der beiden Anschlussteile zusammengepresst werden können.

13. Verfahren zur Herstellung eines Schlauchanschlusses für Analysegeräte und medizinische Geräte, insbesondere für Analysenadeln, **dadurch gekennzeichnet, dass** wenigstens der Schlauch (19), vorzugsweise auch das mit dem Schlauch (19) zu verbindende Teil (13), mit einem Kunststoffabschluss (41) umspritzt wird, und dass an dieser Umspritzung (41) eine zum Strömungskanal (35) rechtwinklige und scharfkantige Anschlussfläche (65) ausgebildet wird.

14. Verfahren nach Anspruch 13, **dadurch gekennzeichnet, dass** die Form für die Umspritzung (15,41) mit einem Kern (69), welcher exakt in den Strömungskanal (33,39) des anzuschliessenden Teils (13,19) passt und in diesen eingeführt wird, gegenüber dem Strömungskanal (33,35) ausgerichtet wird.

15. Verfahren nach Anspruch 14, **dadurch gekennzeichnet, dass** auf den Schlauch (19) wenigstens eine Muffe (51) aufgepresst wird.

16. Verfahren nach Anspruch 15, **dadurch gekennzeichnet, dass** für das Zusammenpressen der Muffe (51) ein Kern (53) in den Strömungskanal (35) eingeführt wird und die Muffe (51) von wenigstens zwei, vorzugsweise drei, Seiten her zusammengepresst wird.

17. Verfahren nach Anspruch 15 oder 16, **dadurch gekennzeichnet, dass** die Muffe (51) zuerst mit nach innen gerichteten Rippen, z.B. einem Gewinde, versehen wird.

18. Verfahren nach einem der Ansprüche 13 bis 17, **dadurch gekennzeichnet, dass** der Schlauch (19) oder bevorzugt die Muffe (51), während der Umspritzung je Haltestelle durch wenigsten zwei Stössel (77,79) in der Gussform (67) gehalten wird.

## Claims

1. A hose connection for analytical appliances and medical equipment, more particularly for connection to analysis needles, **characterised in that** the flow ducts (33, 35) of the two parts for connection (19, 13) are terminated on the connection side with a connection surface (65) which is formed with sharp edges and practically at right angles to the flow duct, at least the hose being provided with an injection moulded surround (41) for the purpose.

2. A hose connection according to claim 1, **characterised in that** the ends of the parts for connection (13, 19) on the connection side are each provided with an injection moulded surround in the form of a dimensionally stable plastic termination (15, 41), which injection moulded surrounds are each aligned to the inside diameter of the flow duct (33, 35).

3. A hose connection according to claim 2, **characterised in that** the two injection moulded surrounds (15, 41) are provided with fit configurations (43, 45) corresponding to one another.

4. A hose connection according to any one of claims 1 to 3, **characterised in that** at least one of the injection moulded surrounds (15, 41) projects beyond the end of the part for connection, particularly of the hose (19), and an extension of the flow duct (33, 35) is formed with a practically identical flow cross-section in said projection.

5. A hose connection according to any one of claims 1 to 4, **characterised in that** the hose (19) engages the injection moulded surround (41) on its outside by toothing.

6. A hose connection according to any one of claims 1 to 5, **characterised in that** at least one ring or one sleeve (51) is pressed on to the hose (19) and **in that** said sleeve (19) is cast in the injection moulded surround (41).

7. A hose connection according to claim 6, **characterised in that** the sleeve (51) is of metal and has inwardly directed ribs which engage the hose (19) by toothing.

8. A hose connection according to claim 6 or 7, **characterised in that** two sleeves (51) are disposed successively on the hose (19).

9. A hose connection according to any one of claims 1 to 8, **characterised in that** the hose injection moulded surround (41) has on the exit side of the hose (19) a plurality of extensions (57) which elastically provide accompanying support for the hose (19).

10. A hose connection according to any one of claims 1 to 9, **characterised in that** the hose injection moulded surround (41) has, on the exit side of the hose (19), substantially radial projections (61).

11. A hose connection according to any one of claims 1 to 10, with a screwthreaded fastener (17, 27) for connecting the two parts for connection to one another, **characterised in that** there is formed on at least one screwthread at least one thickening of a screwthread crest or a narrowing of a screwthread valley.

12. A hose connection according to any one of claims 1 to 11, **characterised in that** a collar (45) is formed on an injection moulded surround so that the connection surfaces (65) of the two parts for connection can be pressed together with a fitting part (25) pressing against the collar (45).

13. A method of making a hose connection for analytical appliances and medical equipment, more particularly for analysis needles, **characterised in that** at least the hose (19), and preferably also the part (13) for connection to the hose (19), is provided with an injection moulded surround in the form of a plastic termination (41), and **in that** a sharp edged connection surface (65) at right angles to the flow duct (35) is formed on said injection moulded surround (41).

14. A method according to claim 13, **characterised in that** the mould for the injection moulded surround (15, 41) with a core (69) which fits exactly into the flow duct (33, 39) of the part (13, 19) for connection, and is introduced into the latter, is aligned relatively to the flow duct (33, 35).

15. A method according to claim 14, **characterised in that** at least one sleeve (51) is pressed on to the hose (19).

16. A method according to claim 15, **characterised in that** for the compression of the sleeve (51) a core (53) is introduced into the flow duct (35) and the sleeve (51) is pressed together from at least two and preferably three sides.

17. A method according to claim 15 or 16, **characterised in that** the sleeve (51) is first provided with inwardly directed ribs, e.g. a screwthread.

18. A method according to any one of claims 13 to 17, **characterised in that** the hose (19) or preferably the sleeve (15), is held by at least two rods (77, 79) in the casting mould (67) for each holding point during the injection moulding of the surround.

## Revendications

1. Raccord de tuyau pour appareils d'analyse et appareils médicaux, en particulier pour le raccord à des aiguilles d'analyse, **caractérisé en ce que** les conduits d'écoulement (33, 35) des deux pièces du raccord (19, 13) sont terminées du côté du raccord avec une surface de raccord (65) configurée pratiquement perpendiculaire au conduit d'écoulement et à arêtes vives, au moins le tuyau étant pourvu pour ceci d'un enrobage (41).

2. Raccord de tuyau selon la revendication 1, **caractérisé en ce que** les extrémités du côté du raccord des pièces du raccord (13, 19) sont enrobées respectivement avec une terminaison en plastique ayant les dimensions prescrites (15, 41), les enrobages étant alignés respectivement sur le diamètre intérieur du conduit d'écoulement (33, 35).

3. Raccord de tuyau selon la revendication 2, **caractérisé en ce que** les deux enrobages (15, 41) sont pourvus de formes d'ajustage (43, 45) correspondant l'une à l'autre.

4. Raccord de tuyau selon l'une des revendications 1 à 3, **caractérisé en ce qu'**au moins l'un des enrobages (15, 41) fait saillie au-delà de l'extrémité de la pièce à raccorder, en particulier du tuyau (19), et dans cette saillie un prolongement du conduit d'écoulement (33, 35) est configuré avec une section d'écoulement pratiquement identique.

5. Raccord de tuyau selon l'une des revendications 1 à 4, **caractérisé en ce que** le tuyau (19) est denté sur son côté extérieur avec l'enrobage (41).

6. Raccord de tuyau selon l'une des revendications 1 à 5, **caractérisé en ce qu'**au moins un anneau ou un manchon (51) est emmanché par pression sur le tuyau (19) et que ce manchon (19) est coulé dans l'enrobage (41).

7. Raccord de tuyau selon la revendication 6, **caractérisé en ce que** le manchon (51) est en métal et présente des nervures orientées vers l'intérieur qui sont dentées avec le tuyau (19).

8. Raccord de tuyau selon la revendication 6 ou 7, **caractérisé en ce que** deux manchons (51) sont placés l'un derrière l'autre sur le tuyau (19).

9. Raccord de tuyau selon l'une des revendications 1 à 8, **caractérisé en ce que** l'enrobage de tuyau (41) présente, sur le côté de sortie du tuyau (19), plusieurs prolongements (57) qui soutiennent le tuyau (19) en l'accompagnant élastiquement.

10. Raccord de tuyau selon l'une des revendications 1 à 9, **caractérisé en ce que** l'enrobage de tuyau (41) présente, sur le côté de sortie du tuyau (19), des nopes (61) qui font saillie approximativement radialement.

11. Raccord de tuyau selon l'une des revendications 1 à 10, avec une fermeture filetée (17, 27) pour relier les deux pièces devant être raccordées l'une à l'autre, **caractérisé en ce qu'**au moins un épaississement d'une nervure de filet ou un rétrécissement d'un fossé de filet est configuré sur au moins un filet.

12. Raccord de tuyau selon l'une des revendications 1 à 11, **caractérisé en ce qu'**il est formé une collerette (45) sur un enrobage si bien que les surfaces de raccord (65) des deux pièces de raccord peuvent être pressées ensemble en appuyant avec une pièce de raccorderie (25) contre la collerette (45).

13. Procédé de fabrication d'un raccord de tuyau pour appareils d'analyse et appareils médicaux, en particulier pour des aiguilles d'analyse, **caractérisé en ce qu'**au moins le tuyau (19), de préférence aussi la pièce (13) à raccorder avec le tuyau (19), est enrobé avec une terminaison en plastique (41) et qu'une surface de raccord (65) perpendiculaire au conduit d'écoulement (35) et à arêtes vives est configurée sur cet enrobage (41).

14. Procédé selon la revendication 13, **caractérisé en ce que** la forme pour l'enrobage (15, 41) est alignée avec un noyau (69), qui est adapté exactement dans le conduit d'écoulement (33, 39) de la pièce à raccorder (13, 19) et qui est introduit dans cette pièce, par rapport au conduit d'écoulement (33, 35).

15. Procédé selon la revendication 14, **caractérisé en ce qu'**au moins un manchon (51) est emmanché par pression sur le tuyau (19).

16. Procédé selon la revendication 15, **caractérisé en ce que**, pour la compression du manchon (51), un noyau (53) est introduit dans le conduit d'écoulement (35) et le manchon (51) est comprimé par au moins deux côtés, de préférence par trois côtés.

17. Procédé selon la revendication 15 ou 16, **caractérisé en ce que** le manchon (51) est tout d'abord pourvu de nervures orientées vers l'intérieur, par exemple d'un filet.

18. Procédé selon l'une des revendications 13 à 17, **caractérisé en ce que** le tuyau (19), ou de préférence le manchon (51) est maintenu dans le moule de fonte pendant l'enrobage par arrêt par au moins deux coulisseaux de presse (77, 79).
